# EUROPEAN PATENT APPLICATION

(11) **EP 4 346 146 A1**
(43) Date of publication of application: **03.04.2024**
(21) Application number: 23192403.6
(22) Date of filing: 21.08.2023
(51) Int. Cl.: H04L 5/00, H04L 27/26, H04W 52/14, H04W 72/23

(54) **DETERMINING WAVEFORM FOR UPLINK TRANSMISSION**

(30) Priority: 30.09.2022 FI 20227129
(71) Applicant: Nokia Technologies Oy, 02610 Espoo (FI)
(72) Inventor: AHMADIAN TEHRANI, Amir Mehdi, Munich (DE); MARCONE, Alessio, Munich (DE); MASO, Marco, Issy les Moulineaux (FR); NHAN, Nhat-Quang, Reims (FR); TIIROLA, Esa Tapani, Oulu (FI)
(74) Representative: Nokia EPO representatives

(57) **Abstract**

To enable at least dynamic waveform switching, at least one predefined bit, in a downlink control information comprising scheduling information for at least one uplink transmission, may have a first preset purpose and a second preset purpose. One or more preset first rules may be applied to determine whether to use the at least one predefined bit for the first preset purpose or for the second preset purpose. When the second preset purpose is used, at least a waveform for the at least one uplink transmission amongst waveforms comprising at least a first waveform and a second waveform is determined, according to one or more preset second rules, based on a value of the at least one predefined bit. The waveform determined is then used in the uplink transmission scheduled.

## Description

### TECHNICAL FIELD

Various example embodiments relate to wireless communications.

### BACKGROUND

Communication systems are under constant development. The 5G, 5G-Advanced, and beyond future wireless networks aim to support a large variety of services with increasing demand in terms of data rate and throughput while providing a higher degree of reliability, keeping the overall system complexity affordable. One factor affecting how the aims are achieved is a waveform that will be used in an air interface. There exists a plurality of different waveforms. However, none of them is an optimal waveform for all use case scenarios.

### SUMMARY

The independent claims define the scope.

According to an aspect there is provided an apparatus comprising: means for receiving downlink control information comprising scheduling information for at least one uplink transmission; means for applying one or more preset first rules to determine whether to use at least one predefined bit in the downlink control information either for a first preset purpose or for a second preset purpose; and means for determining, when using the second preset purpose, according to one or more preset second rules, based on a value of the at least one predefined bit, at least a waveform for the at least one uplink transmission amongst waveforms comprising at least a first waveform and a second waveform.

In embodiments, the apparatus further comprises means for determining, when using the first preset purpose, the waveform for the at least one uplink transmission to be according to a waveform configuration received in the downlink control information, or to be a semi-statically configured waveform configuration if no waveform configuration is received in the downlink configuration; and means for transmitting the uplink transmission using at least the waveform determined for the uplink transmission.

In embodiments, the apparatus further comprises: means for transmitting a request for waveform switching; means for determining a time period for the waveform switching requested; wherein the one or more preset first rules comprises a rule to use the second preset purpose for downlink control information received within the time period.

According to an aspect there is provided an apparatus comprising: means for applying one or more preset first rules to determine whether to use, when generating downlink control information comprising scheduling information, at least one predefined bit either for a first preset purpose or for a second preset purpose; means for setting, when using the second preset purpose, according to one or more preset second rules, for the at least one predefined bit a value to indicate at least a waveform for the at least one uplink transmission amongst waveforms comprising at least a first waveform and a second waveform; means for transmitting the downlink control information comprising the scheduling information for at least one uplink transmission; and means for receiving the uplink transmission, the means for receiving being configured to use, when the downlink control information was generated using the second preset purpose, the waveform indicated for the uplink transmission in the downlink control information.

In embodiments, the apparatus further comprises: means for receiving a request for waveform switching; means for determining a time period for the waveform switching requested; wherein the one or more preset first rules comprises a rule to use the second preset purpose for downlink control information generated within the time period.

In embodiments, the means for determining the time period are configured to determine the time period based on end time of an uplink signal comprising the request.

In embodiments, the at least one predefined bit is either at least one most significant bit or at least one last significant bit in a field informing process of hybrid automatic repeat-request or in a field for triggering a sounding reference signal set or in a field controlling transmit power for the uplink transmission.

In embodiments, the one or more preset second rules comprises a rule according to which, when a format of the downlink control information is a fallback scheduling format, the waveform is determined based on previous downlink control information whose format is a non-fallback scheduling format.

In embodiments, the at least one predefined bit comprises a first predefined bit and a second predefined bit to indicate in addition to the waveform also a rank number, wherein the first predefined bit and the second predefined bit are either two most significant bits or two last significant bits in a field informing process of hybrid automatic repeat-request, or wherein the first predefined bit is either a most significant bit or a last significant bit in a field informing process of hybrid automatic repeat-request and the second predefined bit is either a most significant bit or a last significant bit in a field controlling transmit power for the uplink transmission.

In embodiments, the at least one predefined bit comprises bits in a field for triggering a sounding reference signal set or in a field controlling transmit power for the uplink transmission, and the one or more preset second rules comprises a rule associating a waveform with further information relating to the field.

In embodiments, the one or more preset first rules comprises a rule according to which the second preset purpose is usable only when a format of the downlink control information is a fallback scheduling format.

In embodiments, the apparatus comprises at least one processor, and at least one memory including computer program code, wherein the at least one processor with the at least one memory and computer program code provide said means.

According to an aspect, there is provided a method comprising: receiving downlink control information comprising scheduling information for at least one uplink transmission; applying one or more preset first rules to determine whether to use at least one predefined bit in the downlink control information either for a first preset purpose or for a second preset purpose; and determining, when using the second preset purpose, according to one or more preset second rules, based on a value of the at least one predefined bit, at least a waveform for the at least one uplink transmission amongst waveforms comprising at least a first waveform and a second waveform.

According to an aspect, there is provided a method comprising: applying one or more preset first rules to determine whether to use, when generating downlink control information comprising scheduling information, at least one predefined bit either for a first preset purpose or for a second preset purpose; setting, when using the second preset purpose, according to one or more preset second rules, for the at least one predefined bit a value to indicate at least a waveform for the at least one uplink transmission amongst waveforms comprising at least a first waveform and a second waveform; transmitting the downlink control information comprising the scheduling information for at least one uplink transmission; and receiving the uplink transmission, the means for receiving being configured to use, when the downlink control information was generated using the second preset purpose, the waveform indicated for the uplink transmission in the downlink control information.

According to an aspect, there is provided a computer readable medium comprising program instructions stored thereon for at least one of a first functionality or a second functionality, for performing corresponding functionality, wherein the first functionality comprises at least: applying one or more preset first rules to determine whether to use at least one predefined bit in received downlink control information comprising scheduling information for at least one uplink transmission either for a first preset purpose or for a second preset purpose; and determining, when using the second preset purpose, according to one or more preset second rules, based on a value of the at least one predefined bit, at least a waveform for the at least one uplink transmission amongst waveforms comprising at least a first waveform and a second waveform, and wherein the second functionality comprises at least: applying the one or more preset first rules to determine whether to use, when generating the downlink control information comprising scheduling information, the at least one predefined bit either for the first preset purpose or for the second preset purpose; setting, when using the second preset purpose, according to the one or more preset second rules, for the at least one predefined bit the value to indicate at least the waveform for the at least one uplink transmission amongst the waveforms comprising at least a first waveform and a second waveform; transmitting the downlink control information comprising the scheduling information for at least one uplink transmission; and using, when the downlink control information of a received uplink transmission was generated using the second preset purpose, the waveform indicated for the uplink transmission in the downlink control information.

In an embodiment, the medium is a non-transitory computer readable medium.

According to an aspect, there is provided a computer program comprising instructions for causing an apparatus to perform at least one of a first functionality, or a second functionality, wherein the first functionality comprises at least: applying one or more preset first rules to determine whether to use at least one predefined bit in received downlink control information comprising scheduling information for at least one uplink transmission either for a first preset purpose or for a second preset purpose; and determining, when using the second preset purpose, according to one or more preset second rules, based on a value of the at least one predefined bit, at least a waveform for the at least one uplink transmission amongst waveforms comprising at least a first waveform and a second waveform, and wherein the second functionality comprises at least: applying the one or more preset first rules to determine whether to use, when generating the downlink control information comprising scheduling information, the at least one predefined bit either for the first preset purpose or for the second preset purpose; setting, when using the second preset purpose, according to the one or more preset second rules, for the at least one predefined bit the value to indicate at least the waveform for the at least one uplink transmission amongst the waveforms comprising at least a first waveform and a second waveform; transmitting the downlink control information comprising the scheduling information for at least one uplink transmission; and using, when the downlink control information of a received uplink transmission was generated using the second preset purpose, the waveform indicated for the uplink transmission in the downlink control information.

### BRIEF DESCRIPTION OF DRAWINGS

Embodiments are described below, by way of example only, with reference to the accompanying drawings, in which
Figure 1 illustrates an exemplified wireless communication system;
Figures 2 and 3 illustrate exemplified information exchanges;
Figures 4 to 8 are flow charts illustrating example functionalities; and
Figures 9 to 11 are schematic block diagrams.

### DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the structural elements are not restricted by the terms. The terms are used merely for the purpose of distinguishing an element from other elements. For example, a first predefined purpose could be termed a second predefined purpose, and similarly, a second predefined purpose could be also termed a first predefined purpose without departing from the scope of the present disclosure.

In the following, different exemplifying embodiments will be described using, as an example of an access architecture to which the embodiments may be applied, a radio access architecture based on long term evolution advanced (LTE Advanced, LTE-A) or new radio (NR, 5G, 5G-Advanced), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

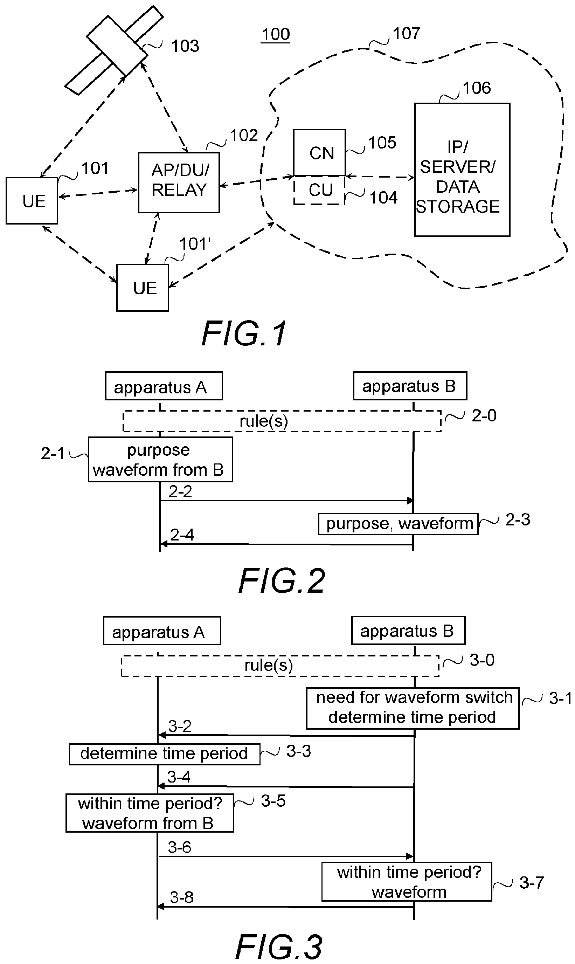

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system 100 given as an example but a person skilled in the art may apply the solution to other communication systems provided with necessary properties.

The example of Figure 1 shows a part of an exemplifying radio access network.

Figure 1 shows user devices 101, 101' configured to be in a wireless connection on one or more communication channels in a cell with an access node (such as (e/g)NodeB) providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 105 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), or user plane function (UPF), or access and mobility management function (AMF), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a computing device ( e.g. a portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction, e.g., to be used in smart power grids and connected vehicles. The user device may also utilize cloud. In some applications, a user device may comprise a user portable device with radio parts (such as a watch, earphones, eyeglasses, other wearable accessories or wearables) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses. Further, it should be appreciated that a number of reception and/or transmission antennas in a user device may vary according to implementation and/or type of the user device.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloud-let, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 106, or utilize services provided by them. The communication network may also be able to support the usage of cloud services, for example at least part of core network operations may be carried out as a cloud service (this is depicted in Figure 1 by "cloud" 107). The communication system may also comprise a central control entity, or a like, providing facilities for networks of different operators to cooperate for example in spectrum sharing.

Edge cloud may be brought into a radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real-time functions being carried out at the RAN side (in a distributed unit, DU 102) and non-real-time functions being carried out in a centralized manner (in a central unit, CU 104). Another example of distribution, the open RAN, includes also disaggregation of certain functionalities between a distributed unit and one or more radio units (illustrated as one entity, DU&RU 102).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 103 in the mega-constellation may cover several satellite-enabled network entities that create on-ground cells. The on-ground cells may be created through an on-ground relay node 102 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

6G networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G will include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

5G networks, 5G-Advanced networks and it is envisaged that 6G networks and beyond, support two or more different waveforms for uplink transmissions. For example, the 5G-Advanced network may semi-statically configure, as a part of radio resource control configuration of an apparatus, for example, a waveform for uplink transmissions. Since the waveform semi-statically configured may not be an optimal waveform for a specific scenario, it is envisaged that a waveform may be dynamically determined (selected) based on an indication provided by repurposed one or more bits in downlink control information, for example as illustrated with Figures 2 to 8. A repurposed bit, or a set of repurposed bits means that the bit, or the set of bits, may be used at least to a first purpose or a second purpose. The first purpose may be a legacy purpose, e.g. a purpose for which the bit or set of bits are used in 5G network or earlier generation networks, and, depending on a scenario, the second purpose, which may be called a repurpose, is for another purpose, or for an additional purpose, to indicate at least a waveform to be used. The term "bit" used herein covers any information unit transmitted in control signaling to which unit a value, that may be different from 1 and 0 and that may be formed by a set of values, may be determined. For example, assuming that a bit space for a process field in a downlink controlling information is 4 bits, meaning that the process field may be used to indicate one out of up to 16 processes, the set of values indicating e.g. 12 processes, or 6, or 5, just to give couple of non-limiting examples, as a first purpose, may be an information unit indicating a first waveform as a second purpose, and the set of values indicating the remaining 4, or 6, or 11 processes as a first purpose, may be an information unit indicating a second waveform as a second purpose. The information unit may be called a signaling state. It should be appreciated that the different examples and solutions discussed herein with uplink transmissions may be implement with downlink transmissions as well.

Figures 2 and 3 illustrate exemplified information exchanges between different apparatuses in a radio network configured to support dynamic determination of at least a waveform amongst two or more waveforms for uplink transmissions. For the sake of clarity of the description, only two apparatuses that may communicate over an air interface are illustrated, one of them, "apparatus A", at least receiving uplink transmissions and transmitting downlink, the other apparatus, "apparatus B", at least receiving downlink transmissions and transmitting uplink, without limiting the example to such a solution and apparatuses. The apparatus A may be, for example, an access point or a distributed unit, or any corresponding unit, examples of which are listed above with reference to block 102 in Figure 1. The apparatus B may be, for example, a user equipment, including wearables, vehicles, robotics, etc., further examples of which are listed above with reference to blocks 101, 101' in Figure 1.

Figures 2 and 3 illustrate exemplified information exchanges between different apparatuses in a radio network configured to support dynamic determination of at least a waveform amongst two or more waveforms for uplink transmissions. For the sake of clarity of the description, only two apparatuses that may communicate over an air interface are illustrated, one of them, "apparatus A", at least receiving uplink transmissions and transmitting downlink, the other apparatus, "apparatus B", at least receiving downlink transmissions and transmitting uplink, without limiting the example to such a solution and apparatuses. The apparatus A may be, for example, an access point or a distributed unit, or any corresponding unit, examples of which are listed above with reference to block 102 in Figure 1. The apparatus B may be, for example, a user equipment, including wearables, vehicles, robotics, etc., further examples of which are listed above with reference to blocks 101, 101' in Figure 1.

In the examples illustrated in Figures 2 and 3, both apparatuses are provided (block 2-0, block 3-0) with one or more preset first rules, one or more preset second rules, information on at least one predefined bit and corresponding first purpose and second purpose. Depending on an implementation, at least some of them may be hardcoded to the apparatuses and/or the apparatus A may have determined them or some of them, or received them, or some of them, for example from a central unit, and then configured the apparatus B, for example using radio resource control configuration, or radio resource control reconfiguration, or a higher-layer configuration, for example as part of a physical uplink shared channel configuration, or in one or more information elements in a search space configuration. The one or more preset first rules determine whether to use the at least one predefined bit in downlink control information either for the first preset purpose or for the second preset purpose. When the second preset purpose is used, the one or more preset second rules are used, based on a value of the at least one predefined bit, to determine at least a waveform for the at least one uplink transmission amongst waveforms comprising at least a first waveform and a second waveform. However, the details how the apparatuses A and B are provided with the one or more preset first rules, the one or more preset second rules, the information on the at least one predefined bit and the corresponding first purpose and second purpose, are not relevant for describing how they are used, and hence, there is no need to describe the details herein.

For example, the at least one predefined bit may be either at least one most significant bit or at least one last significant bit in a field informing process of hybrid automatic repeat-request, e.g. in HARQ process number field, or in a field for triggering a sounding reference signal set, e.g. in SRS request field, or in a field controlling transmit power for the uplink transmission, e.g. in TCP command for scheduled PUSCH (physical uplink shared channel) field.

For example, the one or more preset second rules may comprise a rule according to which, when a format of the downlink control information is a fallback scheduling format, e.g. DCI format 0_0. the waveform is determined based on previous downlink control information whose format is a non-fallback scheduling format, e.g. DCI format 0_1, 0_2.

In a further example, the at least one predefined bit comprises a first predefined bit and a second predefined bit to indicate in addition to the waveform also a rank number. For example, to indicate the waveform and the rank number, the first predefined bit and the second predefined bit may be either two most significant bits or two last significant bits in the field informing process of hybrid automatic repeat-request, or the first predefined bit may be either a most significant bit or a last significant bit in the field informing process of hybrid automatic repeat-request and the second predefined bit may be either a most significant bit or a last significant bit in the field controlling transmit power for the uplink transmission.

For example, the one or more preset first rules may comprise a rule according to which the second preset purpose is usable only when a format of the downlink control information is the fallback scheduling format.

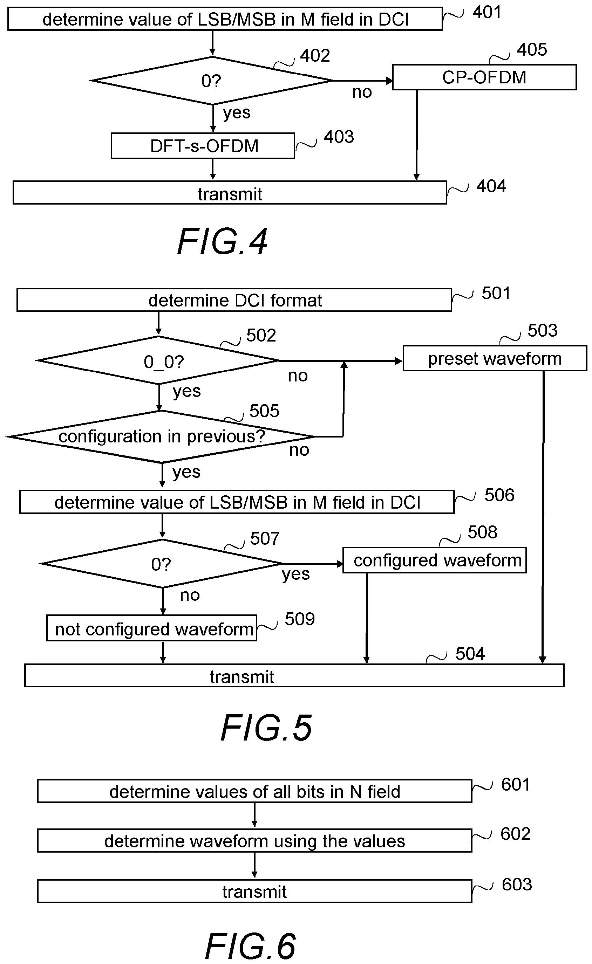

More detailed non-limiting examples, illustrating principles how to use the second preset purpose, are described below with Figures 4 to 8.

Referring to Figure 2, when the apparatus A generates (block 2-1) downlink control information comprising scheduling information, for example as response for the apparatus B having requested resources for uplink data transmission, the apparatus A applies (block 2-1) the one or more preset first rules to determine whether to use, when generating the downlink control information, at least one predefined bit either for a first preset purpose or for a second preset purpose. When the apparatus A uses (block 2-1) the second preset purpose, it sets (block 2-1) according to the one or more preset second rules, for the at least one predefined bit a value to indicate at least the waveform for the at least one uplink transmission amongst the waveforms comprising at least a first waveform and a second waveform. When the apparatus A uses (block 2-1) the first preset purpose, depending on a scenario and downlink control information format used, it may generate downlink control information comprising the scheduling information with or without waveform configuration. In the latter case, a semi-statically configured waveform will be used. Thereby the apparatus A knows the waveform indicated for the uplink transmission from the apparatus B.

The apparatus A then transmits (message 2-2), the downlink control information comprising the scheduling information for at least one uplink transmission. Message 2-2 may be, for example an uplink grant.

The apparatus B receives the downlink control information comprising the scheduling information for at least one uplink transmission, and applies (block 2-3) the one or more preset first rules to determine whether to use at least the one predefined bit in the downlink control information either for the first preset purpose or for the second preset purpose. When the apparatus B uses the second preset purpose, it determines (block 2-3) according to the one or more preset second rules, based on the value of the at least one predefined bit, at least the waveform for the at least one uplink transmission amongst the waveforms comprising at least the first waveform and the second waveform. When the apparatus B uses the first preset purpose, it determines the waveform for the at least one uplink transmission to be according to the waveform configuration received in the downlink control information, or to be the semi-statically configured waveform configuration if no waveform configuration is received in the downlink control information.

The apparatus B then transmits the uplink transmission scheduled (message 2-4) using at least the waveform the apparatus B determined for the uplink transmission.

Since the apparatus A knows the waveform, be that the one indicated using the second purpose, or semi-statically configured, or a waveform configuration in message 2-2, it uses the waveform to receive the uplink transmission (message 2-4).

Hence, the apparatus A does not need to determine the waveform used by the apparatus B (or the Apparatus C) blindly (i.e. based on two reception hypothesis).

In one example, based on the example illustrated in Figure 2, the apparatus A may signal to the apparatus B information which triggers the use of the second purpose.

Referring to Figure 3, the apparatus B determines (block 3-1) that there is a need for a waveform switch. For example, the apparatus B may detects that uplink transmissions fail, or the apparatus B notices that it is near a cell edge, or there is a coverage shortage for some other reason, or a measured quality of a downlink signal is below a threshold, to list some examples when the apparatus B may want dynamic waveform switching. Regardless of what the reason is, the apparatus B transmits a request (message 3-2) for waveform switching. The request may be sent for example on physical uplink control channel. Depending on an implementation, the request may be a scheduling request with additional information, for example a bit or a flag indicating that it contains also the request for waveform switching, or the request is signaling specified for this purpose. In the example illustrated in Figure 3, the request is the signaling specified for this purpose, and it does not trigger generating downlink control information comprising scheduling information, to illustrate better how to apply a first rule to use the second preset purpose within a time period, which depends on the timing of the request (message 3-2).

The apparatus B determines (block 3-1) a time period for the waveform switching requested, and it may determine a starting time for the time period. For example, the time period may start at the end of the signal carrying the request, or after an offset after the end of the signal carrying the request. A length of the time period and/or how its starting time is determined may be part of the one or more first rules, for example.

When receiving the request (message 3-2) for waveform switching, the apparatus A determines (block 3-3) the time period and its starting time using the same principles as the apparatus A.

When a scheduling request (message 3-4) is received from the apparatus B, the apparatus A applies (block 3-5) a preset first rule to use for the at least one predefined bit the second preset purpose for downlink control information if that is generated within the time period, otherwise the apparatus A uses, in the illustrated example, the first preset purpose. Then the apparatus A generates the downlink control information, as described above with block 2-1, based on whether the first preset purpose or the second preset purpose is used, and transmits (message 3-6, corresponding to message 2-2), the downlink control information comprising the scheduling information for at least one uplink transmission. Message 3-6 may be, for example an uplink grant.

The apparatus B receives the downlink control information comprising the scheduling information for at least one uplink transmission, and applies (block 3-7) a preset first rule to use for the at least one predefined bit the second preset purpose for downlink control information if that is received within the time period, otherwise the apparatus B uses, in the illustrated example, the first preset purpose. Then the apparatus B determines at least the waveform, as described above with block 2-3, based on whether the first preset purpose or the second preset purpose is used, and transmits the uplink transmission scheduled (message 3-8, corresponding to message 2-4) using at least the waveform the apparatus B determined for the uplink transmission.

Since the apparatus A knows the waveform, be that the one indicated using the second purpose, or semi-statically configured, or a waveform configuration in message 3-6, it uses the waveform to receive the uplink transmission (message 3-8).

Naturally, if message 3-2 also contained the scheduling request, message 3-6 will be generated by the apparatus A and received by the apparatus B within the time period. However, in implementations, the time period may cover subsequent scheduling requests and uplink grants (also when message 3-2 does not contain a scheduling request).

Figures 4 to 8 illustrate some non-limiting examples of how the second purpose of at least one predefined bit may be used to determine at least the waveform, possibly also a rank number. The examples are described using principles and terminology of 5G-Advanced technology without limiting the examples to 5G-Advanced, and the terminology used. Further, in the examples it is assumed, just for the sake of clarity of the description, that there are two waveforms, a cyclic prefix orthogonal frequency division multiplexing, CP-OFDM, and a discrete Fourier transform spread orthogonal frequency division multiplexing, DFT-s-OFDM. It should be appreciated that in other implementations principles disclosed below resulting to CP-OFDM may result to DFT-s-OFDM, and vice versa. CP-OFDM can support multi-layer uplink transmissions but it is not optimal for coverage limited cases. DFT-s-OFDM is optimal for limited cases since it has a lower peak-to-average power ratio and requires smaller output power backoff, but it does not support multi-layer uplink transmissions and hence it is not optimal for scenarios that require high spectral efficiency. The two waveforms represent the at least two different waveforms having different maximum power reduction (MPR)/ peak-to-average power ratio (PAPR) characteristics, for example high and low. Depending on a scenario these may be:
a) DFT-s-OFDM (lower MPR) and CP-OFDM (higher MPR),
b) DFT-s-OFDM with frequency domain spectral shaping and spectrum extension (lower MPR) and DFT-s-OFDM without frequency domain spectral shaping and spectrum extension (higher MPR),
c) CP-OFDM with tone reservation (lower MPR) and CP-OFDM (higher MPR).

Figures 4 and 5 illustrate examples in which there is one predefined bit, which has a first predefined purpose and a second predefined purpose. In the illustrated examples the predefined bit is either a last significant bit, LSB, or a most significant bit, MSB, in an M field in the downlink control information, DCI. The M field comprising the one predefined bit may be the hybrid automatic repeat-request process number field (HARQ process number field), or the transmit power control field (TCP field), or the sounding reference signal field (SRS field), provided that the format of the downlink control information comprises such a field. It is a straightforward process to implement the examples for any other number of possible waveform candidates by using more than one bit. For example, if there are four candidate waveforms, a combination of two bits can be used to indicate which one of the four candidate waveforms to use.

In the example of Figure 4 and 5 one second preset rule associates a value of the predefined bit directly with one waveform. In other words, a value of the repurposed bit indicates explicitly a waveform to be used for uplink transmissions scheduled in the downlink control information. In the example of Figure 4 there is only one preset rule, whereas in the example of Figure 5, there are further second predefined rules.

Referring to Figure 4, the value of the predefined bit is determined in block 401. In other words, the value of the last significant bit (LSB) or the most significant bit (MSB) in the M field in the downlink control information DCI is determined, and the value is used to determine the waveform for the uplink transmission(s) scheduled in the downlink control information. In the illustrated example, if the value is 0 (block 402: yes), DFT-s-OFDM is determined (block 403) to be the waveform, which is used when one or more uplink transmissions scheduled in the downlink control information are transmitted (block 404). Correspondingly, if the value is not 0 (block 402: no), i.e. the value is 1, CP-OFDM is determined (block 405) to be the waveform, which is used when one or more uplink transmissions scheduled in the downlink control information are transmitted (block 404) In other words, in the illustrated example, if the value of the predefined bit in the DCI is 0, DFT-s-OFDM is configured and CP-OFDM is configured, if the value of the predefined bit in the DCI is 1.

In the example illustrated in Figure 5, the preset second rules comprise a rule relating to the format of the downlink control information. In other implementations said rule may be one of the preset first rules. For example, the rule may be one of the second rules, when the downlink control information is within the time period during which the second purpose is to be used, as described above with Figure 3. Further, in the example of Figure 5, the preset second rules comprise a rule relating to content in a previous (most recent) downlink control information of a format that schedules uplink transmissions and allows a waveform configuration to be included in the downlink control information, for example by means of additional bits or additional fields.

Referring to Figure 5, the format of the downlink control information is determined (block 501). If the format is not a fallback uplink scheduling format, e.g. DCI format 0_0 (block 502: no), the preset waveform, e.g. a semi-statically configured waveform, is (block 503) the waveform, which is used also when one or more uplink transmissions scheduled in the downlink control information are transmitted (block 504).

If the format of the downlink control information is a fallback scheduling format, in the illustrated example DCI format 0_0 (block 502: yes), it is determined (block 505) whether a previous, i.e. the most recent, downlink control information scheduling uplink transmission(s) having a non-fallback scheduling format, e.g. the most recent DCI format 0_1/0_2, comprised a waveform configuration. If it comprised (block 505: yes), the value of the predefined bit is determined in block 506. In other words, the value of the last significant bit (LSB) or the most significant bit (MSB) in the M field in the downlink control information DCI is determined, and the value is used to determine the waveform for the uplink transmission(s) scheduled in the downlink control information. In the illustrated example, if the value is 0 (block 507: yes), the waveform configured in the previous DCI of the non-fallback scheduling format is determined (block 508) to be the waveform, which is used when one or more uplink transmissions scheduled in the downlink control information are transmitted (block 504). If the value is not 0 (block 507: no), i.e. the value is 1, the other waveform, i.e. the one that was not configured, is determined (block 509) to be the waveform, which is used when one or more uplink transmissions scheduled in the downlink control information are transmitted (block 504). In other words, in the illustrated example, if the configured waveform in the previous DCI format 0_1/0 2 is DFT-s-OFDM, it will be used, if the value of the predefined bit in the DCI format 0_0 is 0, whereas CP-OFDM will be used, if the value of the predefined bit in the DCI format 0_0 is 1.

If the previous downlink control information scheduling uplink transmission(s) having a non-fallback uplink scheduling format, e.g. the most recent DCI format 0_1/0_2, did not (block 505: no) comprise the waveform configuration, the preset waveform is (block 503) the waveform, which is used also when one or more uplink transmissions scheduled in the downlink control information are transmitted (block 504).

Figure 6 illustrates an example, in which all bits, or at least two bits, in an N field are predefined bits having a first predefined purpose and a second predefined purpose, and the apparatus comprises the second preset rules hardcoded, non-limiting examples of the preset rules being described below with tables. The second preset rules described below comprises a rule associating a waveform with further information relating to the N field. The N field may be the TCP field, or SRS field, provided that the format of the downlink control information comprises such a field.

Referring to Figure 6, values of all bits in the N field in the downlink control information are determined (block 601). The values are used to determine (block 602) the waveform, which is used when one or more uplink transmissions scheduled in the downlink control information are transmitted (block 603).

For example, TPC field of the DCI may be used when initial physical uplink shared channel transmission, e.g. PUSCH Type A Msg3 transmission, fails for example due to a coverage shortage, to indicate waveform for retransmissions, for example via DCI 0_0. It may include waveform switching for retransmissions. In the example illustrated in table 1, it is assumed that, due to the assumed coverage shortage, only non-zero positive values of TPC fields are useful and usable without loss link adaptation and power control flexibility. In the example illustrated in table 2, a predefined waveform has been specified to all values of TPC fields.

**Table 1**

| | | | | |
|---|---|---|---|---|
| TPC command | 00 | 01 | 10 | 11 |
| TPC command field | 2 | 3 | 2 | 3 |
| Waveform | DFT-s-OFDM | | CP-OFDM | |

**Table 2**

| TPC command field | Accumulated | Absolute | Waveform |
|---|---|---|---|
| 0 | -1 | -4 | CP-OFDM |
| 1 | 0 | -1 | CP-OFDM |
| 2 | 1 | 1 | DFT-s-OFDM |
| 3 | 3 | 4 | DFT-s-OFDM |

Still a further example, relating to the SRS field, is illustrated in table 3. In the example illustrated in table 3, it is assumed that, due to a coverage shortage, only aperiodic-SRS-resource Trigger=1 or no A-SRS resource set can be triggered in SRS field.

**Table 3**

| | | | | |
|---|---|---|---|---|
| SRS request field | 00 | 01 | 10 | 11 |
| aperiodicSRSre-source trigger | no A-SRS | 1 | no A-SRS | 3 |
| Waveform | DFT-s-OFDM | | CP-OFDM | |

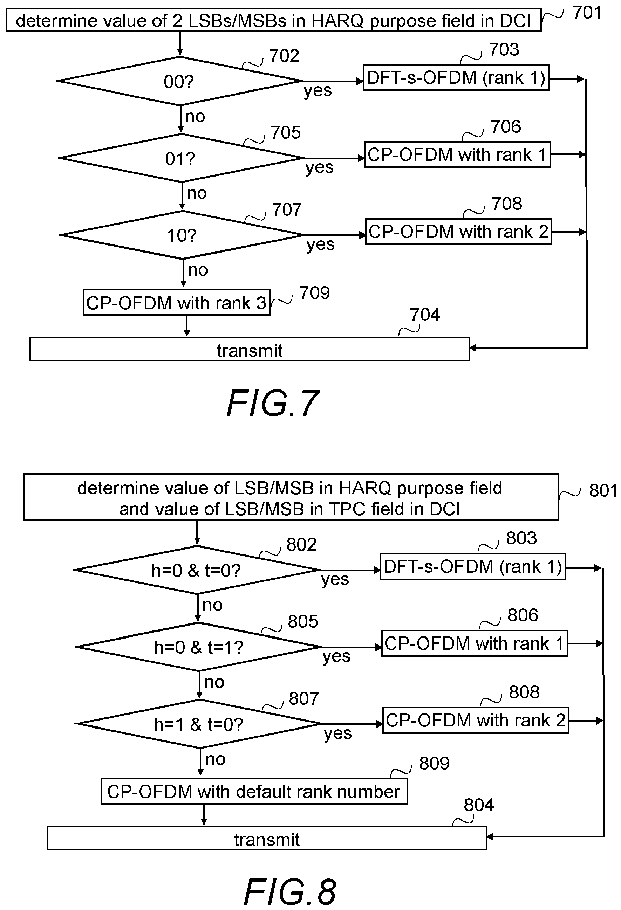

The examples illustrated in Figures 7 and 8 are using two predefined bits to indicate a waveform and a rank number. The indicated rank number may be prioritized for the uplink transmission scheduled over a default rank number, which may be a previously configured rank number.

In the illustrated example of Figure 7 the two predefined bits are either two last significant bits or two most significant bits in the HARQ process number field.

Referring to Figure 7, the values of the two predefined bits are determined in block 701. In other words, the values of the two last significant bits, LSB, or the two most significant bits, MSB, in the HARQ process number field in the downlink control information DCI are determined, and the values are used to determine the waveform and the rank number for the uplink transmission(s) scheduled in the downlink control information.

In the illustrated example of Figure 7, if the values are 00 (block 702: yes), DFT-s-OFDM is determined (block 703) to be the waveform, and the rank number is 1, which are used when one or more uplink transmissions scheduled in the downlink control information are transmitted (block 704).

In the illustrated example of Figure 7, if the values are 01 (block 702: no, block 705: yes), CP-OFDM is determined (block 706) to be the waveform with a rank number 1, which are used when one or more uplink transmissions scheduled in the downlink control information are transmitted (block 704).

In the illustrated example of Figure 7, if the values are 10 (block 702: no, block 705: no, block 707: yes), CP-OFDM is determined (block 708) to be the waveform with a rank number 2, which are used when one or more uplink transmissions scheduled in the downlink control information are transmitted (block 704).

In the illustrated example of Figure 7, if the values are 11 (block 702: no, block 705: no, block 707: no), CP-OFDM is determined (block 709) to be the waveform with a rank number 3, which are used when one or more uplink transmissions scheduled in the downlink control information are transmitted (block 704). In further examples the rank number may be 2 or the default rank number, for example.

In the illustrated example of Figure 8 one of the two predefined bits, denoted in Figure 8 by h, is either the last significant bit or the most significant bit in the HARQ process number field, and the other one, denoted in Figure 8 by t, is either the last significant bit or the most significant bit in the TCP field.

Referring to Figure 8, the values of the two predefined bits are determined in block 801. In other words, the value of the last significant bit, LSB, or the most significant bit, MSB, in the HARQ process number field in the downlink control information DCI and the value of the last significant bit, LSB, or the most significant bit, MSB, in the TPC field in the downlink control information DCI are determined. The values are used to determine the waveform and the rank number for the uplink transmission(s) scheduled in the downlink control information.

In the illustrated example of Figure 8, if the value in the HARQ process number field is 0 and the value in the TCP field is 0 (block 802: yes), DFT-s-OFDM is determined (block 803) to be the waveform, and the rank number is 1, which are used when one or more uplink transmissions scheduled in the downlink control information are transmitted (block 804).

In the illustrated example of Figure 8, if the value in the HARQ process number field is 0 and the value in the TCP field is 1 (block 802: no, block 805: yes), CP-OFDM is determined (block 806) to be the waveform with a rank number 1, which are used when one or more uplink transmissions scheduled in the downlink control information are transmitted (block 804).

In the illustrated example of Figure 8, if the value in the HARQ process number field is 1 and the value in the TCP field is 0 (block 802: no, block 805: no, block 807: yes), CP-OFDM is determined (block 808) to be the waveform with a rank number 2, which are used when one or more uplink transmissions scheduled in the downlink control information are transmitted (block 804).

In the illustrated example of Figure 8, if the value in the HARQ process number field is 1 and the value in the TCP field is 1 (block 802: no, block 805: no, block 807: no), CP-OFDM is determined (block 809) to be the waveform with the default rank number, which are used when one or more uplink transmissions scheduled in the downlink control information are transmitted (block 804). In further examples the rank number may be 3, or 2, for example.

As said above, the examples described, especially with Figures 4 to 8, are mere non-limiting examples, not covering all possibilities how the second purpose and bit values may be mapped to a waveform or to a waveform and a rank number.

As can be seen from the above examples, downlink control information without any additional information, may be used for dynamically determine (or switch) at least a waveform for a scheduled uplink transmission.

The blocks, related functions, and information exchanges (messages/signals) described above by means of Figures 1 to 8 are in no absolute chronological order, and some of them may be performed simultaneously or in an order differing from the given one. Other functions can also be executed between them or within them, and other information may be transmitted, and/or other rules applied. Some of the blocks or part of the blocks or one or more pieces of information can also be left out or replaced by a corresponding block or part of the block or one or more pieces of information. Furthermore, some of the blocks in one example may be combined with another example.

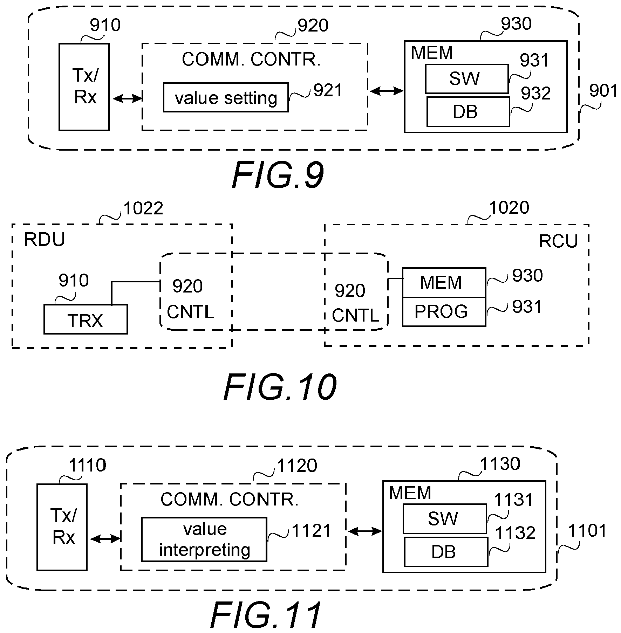

Figure 9 illustrates an apparatus configured to at least transmit the one or more instructions on how to determine a waveform for at least one uplink transmissions, and to apply then when receiving uplink transmission. Figure 10 illustrates an apparatus configured to determine, transmit and apply the one or more instructions, and to allocate resources at least for uplink transmissions to the apparatus. In other words, the apparatus of Figure 10 may implement distributed functionality. Figure 11 illustrates an apparatus configured to receive the one or more instructions and to apply them to determine a waveform to be used in uplink transmissions from the apparatus. The apparatus 901, 1101 may comprise one or more communication control circuitry 920, 1120 such as at least one processor, and at least one memory 930, 1130 including one or more algorithms 931, 1131, such as a computer program code (software) wherein the at least one memory and the computer program code (software) are configured, with the at least one processor, to cause the apparatus to carry out any one of the exemplified functionalities of the apparatus described above. Said at least one memory 930, 1131 may also comprise at least one database 932, 1132.

Referring to Figure 9, the one or more communication control circuitry 920 of the apparatus 901 comprise at least value setting circuitry 921 which is configured to perform at least generating downlink control information comprising scheduling information according to embodiments, and possibly the one or more rules, other configuration information and/or time period determining and monitoring, as discussed with Figure 3. To this end, the waveform determining circuitry 921 of the apparatus 901 is configured to carry out at least some of the functionalities of the apparatus described above, e.g., by means of Figures 2 to 8, by the apparatus transmitting downlink, receiving uplink, e.g. the apparatus A, using one or more individual circuitries.

Referring to Figure 9, the memory 930 may be implemented using any suitable data storage technology, such as semiconductor based memory devices, flash memory, magnetic memory devices and systems, optical memory devices and systems, fixed memory and removable memory.

Referring to Figure 9, the apparatus 901 may further comprise different interfaces 910 such as one or more communication interfaces (TX/RX) comprising hardware and/or software for realizing communication connectivity according to one or more communication protocols. The one or more communication interfaces 910 may enable connecting to the Internet and/or to a core network of a wireless communications network. The one or more communication interface 910 may provide the apparatus with communication capabilities to communicate in a cellular communication system and enable communication to different network nodes or elements or terminal devices or user equipments, for example. The one or more communication interfaces 910 may comprise standard well-known components such as an amplifier, filter, frequency-converter, (de)modulator, and encoder/decoder circuitries, controlled by the corresponding controlling units, and one or more antennas.

In an embodiment, as shown in Figure 10, at least some of the functionalities of the apparatus of Figure 9 may be shared between two physically separate devices, forming one operational entity. Therefore, the apparatus may be seen to depict the operational entity comprising one or more physically separate devices for executing at least some of the described processes. Thus, the apparatus of Figure 10, utilizing such shared architecture, may comprise a remote control unit RCU 1020, such as a host computer or a server computer, operatively coupled (e.g. via a wireless or wired network) to a remote distributed unit RDU 1022 located in the base station. In an embodiment, at least some of the described processes may be performed by the RCU 1020. In an embodiment, the execution of at least some of the described processes may be shared among the RDU 1022 and the RCU 1020.

Similar to Figure 9, the apparatus of Figure 10 may comprise one or more communication control circuitry (CNTL) 920, such as at least one processor, and at least one memory (MEM) 930, including one or more algorithms (PROG) 931, such as a computer program code (software) wherein the at least one memory and the computer program code (software) are configured, with the at least one processor, to cause the apparatus to carry out any one of the exemplified functionalities of the apparatus described above, e.g., by means of Figures 2 to 8, by the apparatus transmitting downlink, receiving uplink, e.g. the apparatus A.

In an embodiment, the RCU 1020 may generate a virtual network through which the RCU 1020 communicates with the RDU 1022. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the RCU). External network virtualization is targeted to optimized network sharing. Another category is internal virtual networking which provides network-like functionality to the software containers on a single system. Virtual networking may also be used for testing the terminal device.

In an embodiment, the virtual network may provide flexible distribution of operations between the RDU and the RCU. In practice, any digital signal processing task may be performed in either the RDU or the RCU and the boundary where the responsibility is shifted between the RDU and the RCU may be selected according to implementation.

Referring to Figure 11, the one or more communication control circuitry 1120 of the apparatus 1101 comprise at least a value interpreting circuitry 1121 which is configured to perform determining at least waveform to scheduled uplink transmissions from the apparatus 1101 based on whether to apply a first purpose or a second purpose for at least a predefined bit, and possibly time period determining and monitoring, as discussed with Figure 3, according to embodiments. To this end, the value interpreting circuitry 1121 of the apparatus 1101 is configured to carry out at least some of the functionalities of the apparatus (uplink transmitting apparatus, e.g. the apparatus B) described above, e.g., by means of Figures 2 to 8, using one or more individual circuitries.

Referring to Figure 11, the memory 1130 may be implemented using any suitable data storage technology, such as semiconductor based memory devices, flash memory, magnetic memory devices and systems, optical memory devices and systems, fixed memory and removable memory.

Referring to Figure 11, the apparatus 1101 may further comprise different interfaces 1110 such as one or more communication interfaces (TX/RX) comprising hardware and/or software for realizing communication connectivity according to one or more communication protocols. The one or more communication interfaces 1110 may enable connecting to the Internet and/or to a core network of a wireless communications network via an access node, for example. The one or more communication interface 1110 may provide the apparatus with communication capabilities to communicate in a cellular communication system and enable communication to different network nodes or elements. The one or more communication interfaces 1110 may comprise standard well-known components such as an amplifier, filter, frequency-converter, (de)modulator, and encoder/decoder circuitries, controlled by the corresponding controlling units, and one or more antennas.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Figures 2 to 8 may be carried out by an apparatus comprising corresponding means for carrying out at least some of the described processes, for example means per a block or means per a plurality of blocks. It should be appreciated that any of the apparatuses may be implemented by physically distributed devices forming one logical apparatus. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Figures 2 to 8 or operations thereof.

Embodiments as described may also be carried out in the form of a computer process defined by a computer program or portions thereof. Embodiments of the methods described in connection with Figures 2 to 8 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising:
means for receiving downlink control information comprising scheduling information for at least one uplink transmission;
means for applying one or more preset first rules to determine whether to use at least one predefined bit in the downlink control information either for a first preset purpose or for a second preset purpose; and
means for determining, when using the second preset purpose, according to one or more preset second rules, based on a value of the at least one predefined bit, at least a waveform for the at least one uplink transmission amongst waveforms comprising at least a first waveform and a second waveform.

2. The apparatus of claim 1, further comprising:
means for determining, when using the first preset purpose, the waveform for the at least one uplink transmission to be according to a waveform configuration received in the downlink control information, or to be a semi-statically configured waveform configuration if no waveform configuration is received in the downlink configuration; and
means for transmitting the uplink transmission using at least the waveform determined for the uplink transmission.

3. The apparatus of claim 1 or 2, further comprising:
means for transmitting a request for waveform switching;
means for determining a time period for the waveform switching requested;
wherein the one or more preset first rules comprise a rule to use the second preset purpose for downlink control information received within the time period.

4. An apparatus comprising:
means for applying one or more preset first rules to determine whether to use, when generating downlink control information comprising scheduling information, at least one predefined bit either for a first preset purpose or for a second preset purpose;
means for setting, when using the second preset purpose, according to one or more preset second rules, for the at least one predefined bit a value to indicate at least a waveform for the at least one uplink transmission amongst waveforms comprising at least a first waveform and a second waveform;
means for transmitting the downlink control information comprising the scheduling information for at least one uplink transmission; and
means for receiving the uplink transmission, the means for receiving being configured to use, when the downlink control information was generated using the second preset purpose, the waveform indicated for the uplink transmission in the downlink control information.

5. The apparatus of claim 4, further comprising:
means for receiving a request for waveform switching;
means for determining a time period for the waveform switching requested;
wherein the one or more preset first rules comprise a rule to use the second preset purpose for downlink control information generated within the time period.

6. The apparatus of claim 3 or 5, wherein the means for determining the time period are configured to determine the time period based on end time of an uplink signal comprising the request.

7. The apparatus of any preceding claim, wherein the at least one predefined bit is either at least one most significant bit or at least one least significant bit in a field informing process of hybrid automatic repeat-request or in a field for triggering a sounding reference signal set or in a field controlling transmit power for the uplink transmission.

8. The apparatus of claim 7, wherein the one or more preset second rules comprise a rule according to which, when a format of the downlink control information is a fallback scheduling format, the waveform is determined based on previous downlink control information whose format is a non-fallback scheduling format.

9. The apparatus of any preceding claim 1 to 6,
wherein the at least one predefined bit comprises a first predefined bit and a second predefined bit to indicate in addition to the waveform also a rank number, wherein the first predefined bit and the second predefined bit are either two most significant bits or two least significant bits in a field informing process of hybrid automatic repeat-request, or wherein the first predefined bit is either a most significant bit or a least significant bit in a field informing process of hybrid automatic repeat-request and the second predefined bit is either a most significant bit or a least significant bit in a field controlling transmit power for the uplink transmission.

10. The apparatus of any preceding claim 1 to 6, wherein the at least one predefined bit comprises bits in a field for triggering a sounding reference signal set or in a field controlling transmit power for the uplink transmission, and the one or more preset second rules comprise a rule associating a waveform with further information relating to the field.

11. The apparatus of any preceding claim, wherein the one or more preset first rules comprise a rule according to which the second preset purpose is usable only when a format of the downlink control information is a fallback scheduling format.

12. A method comprising:
receiving downlink control information comprising scheduling information for at least one uplink transmission;
applying one or more preset first rules to determine whether to use at least one predefined bit in the downlink control information either for a first preset purpose or for a second preset purpose; and
determining, when using the second preset purpose, according to one or more preset second rules, based on a value of the at least one predefined bit, at least a waveform for the at least one uplink transmission amongst waveforms comprising at least a first waveform and a second waveform.

13. A method comprising:
applying one or more preset first rules to determine whether to use, when generating downlink control information comprising scheduling information, at least one predefined bit either for a first preset purpose or for a second preset purpose;
setting, when using the second preset purpose, according to one or more preset second rules, for the at least one predefined bit a value to indicate at least a waveform for the at least one uplink transmission amongst waveforms comprising at least a first waveform and a second waveform;
transmitting the downlink control information comprising the scheduling information for at least one uplink transmission; and
receiving the uplink transmission, the means for receiving being configured to use, when the downlink control information was generated using the second preset purpose, the waveform indicated for the uplink transmission in the downlink control information.

14. A computer readable medium comprising program instructions stored thereon for at least one of a first functionality or a second functionality, for performing corresponding functionality,
wherein the first functionality comprises at least:
applying one or more preset first rules to determine whether to use at least one predefined bit in received downlink control information comprising scheduling information for at least one uplink transmission either for a first preset purpose or for a second preset purpose; and
determining, when using the second preset purpose, according to one or more preset second rules, based on a value of the at least one predefined bit, at least a waveform for the at least one uplink transmission amongst waveforms comprising at least a first waveform and a second waveform, and
wherein the second functionality comprises at least:
applying the one or more preset first rules to determine whether to use, when generating the downlink control information comprising scheduling information, the at least one predefined bit either for the first preset purpose or for the second preset purpose;
setting, when using the second preset purpose, according to the one or more preset second rules, for the at least one predefined bit the value to indicate at least the waveform for the at least one uplink transmission amongst the waveforms comprising at least a first waveform and a second waveform;
transmitting the downlink control information comprising the scheduling information for at least one uplink transmission; and
using, when the downlink control information of a received uplink transmission was generated using the second preset purpose, the waveform indicated for the uplink transmission in the downlink control information.

15. The computer readable medium of claim 14, wherein the medium is a non-transitory computer readable medium.
